# EUROPEAN PATENT APPLICATION

(11) **EP 0 540 198 A1**
(43) Date of publication of application: **05.05.1993**
(21) Application number: 92309177.1
(22) Date of filing: 08.10.1992
(51) Int. Cl.: G06F 12/06

(54) **Memory controller and data processing system**

(30) Priority: 11.10.1991 JP 290408/91
(71) Applicant: International Business Machines Corporation, Armonk, N.Y. 10504 (US)
(72) Inventor: Fujita, Norio, Kouka-gun, Shiga-ken (JP); Gohda, Mitsuhiro, Pacific Palance Minami-Rinkan, Kanagawa-ken (JP)
(74) Representative: Burt, Roger James, Dr.

(57) **Abstract**

A memory controller 18 of a data processing system controls access to a memory having a plurality of memory banks of memory units. The banks operate in either an interleave or non-interleave access operation. The controller has map forming means 42A and 42B to map the memory units arranged in first and second predetermined orders, the second map beng in reverse order relative to the first map.

Memory unit selection means 44A and 44B select which of the memory units in each of the maps an address from a cpu or a DMA controller is assigned to and control means 46 generates the physical location address in interleave or non-interleave operation in accordance with the selected unit being assigned to different banks or the same bank.

## Description

### DESCRIPTION

This invention relates to a data processing system, and to a memory controller for generating physical memory location addresses based on the address from a CPU or a DMA controller.

Interleaving memory access methods have been adopted by large computers, but it is also adopted by a personal computer to increase memory access speed. Plural connectors or slots may be provided in a personal computer for allowing a user to establish additional system memory cards. In a conventional personal computer, there is a limitation on the configuration where the additional memory cards or modules are attached to the slots, in order to allow the memory controller to operate in interleave memory access operation. For example, in a data processing system where a part of the slots for receiving memory cards are provided in an even memory bank and the remaining part of slots are provided in an odd memory bank, it is required that the capacity of the memory card on the first slot in the odd bank is the same as the capacity of the memory card on the first slot in the even bank. If the capacities are different from each other, interleave memory access operations between said two memory cards could not he operated.

An object of the present invention is to resolve the limitation on the configuration where memory modules are attached to the slots.

According to the present invention there is now provided a data processing system comprising a CPU; a DMA controller; a system memory, said memory being comprised of a plurality of memory banks, said banks being operable in an interleave memory access operation and being comprised of a plurality of memory units; a memory controller for controlling access to said memory, said memory controller having means for forming a plurality of memory maps, said maps being comprised of memory units arranged in different orders according to the number of said hanks, for relating addresses from said CPU or said DMA controller to the memory units in each of said maps, and for generating the physical location address in interleave memory access operation or non-interleave memory access operation in accordance with the detected memory units being in different banks or the same bank; and
a bus for connecting said CPU and/or said DMA controller to said memory controller.

Thus, in one embodiment a memory controller constructed in accordance with the present invention, in the case where memory units are allocated to a plurality of interleavable banks, has a function for forming a plurality of memory maps which is comprised of the memory units in all banks arranged in predetermined different orders according to the number of said banks, detecting that an address area within a predetermined range involving CPU addresses belongs to which memory units in each of a plurality of said memory maps, and determining whether each of the detected memory units belongs to banks interleavable with each other.

The invention will now be described by way of example with reference to the accompanying drawings in which:-
FIG.1 is a block diagram showing an embodiment of a memory controller constructed in accordance with the present invention.
FIG.2 is a block diagram showing th whole construction of the embodiment of a data processing system according to the present invention.
FIG.3 is a block diagram showing an example of the contents of data retained in a register of the memory controller of said embodiment.
FIG.4 is a block diagram showing an example of memory maps of said embodiment.
FIG.5 is a block diagram showing an example of a first memory map forming means in the memory controller of said embodiment.
FIG.6 is a block diagram showing an example of a second memory map forming means in the memory controller of said embodiment.
FIG.7 is a block diagram showing an example of a first memory unit selecting means in the memory controller of said embodiment.
FIG.8 is a block diagram showing an example of a second memory unit selecting means in the memory controller of said embodiment.
FIG.9 is a block diagram showing an example of a part having an interleave/non-interleave detecting function of a control means in the memory controller of said embodiment.
FIG.10 is a block diagram showing an example of a part having a RAS line selecting function of the control means in the memory controller of said embodiment.
FIG.11 shows an example of a memory multiplex address table of the said embodiment.

### Embodiment

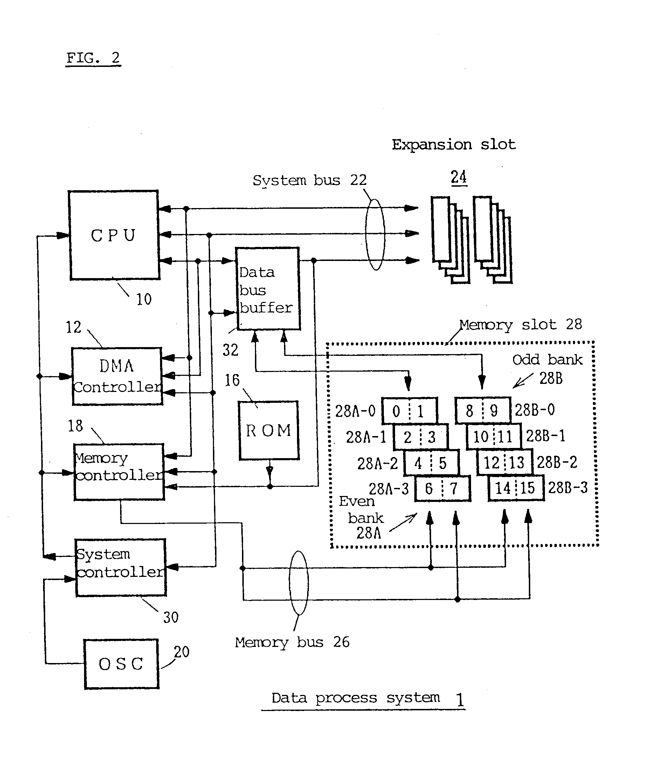

FIG.2 shows an embodiment of a data processing system according to this invention. In the figure, a data processing system 1 comprises a microprocessor (CPU) 10, a DMA controller 12, a ROM 16 for storing a POST (Power On Self Test Program) /BIOS (Basic Input-Output System), a memory controller 18, a system controller 30, a data bus buffer 32, a system clock generator 20, a system bus 22, plural expansion slots 24 for additional cards, a memory bus 26, and plural memory slots 28 for receiving memory units. The memory slots 28 are divided into four memory slots 28A-0, 28A-1, 28A-2, 28A-3 in an even bank 28A and four memory slots 28B-0, 28B-1, 28B-2, and 28B-3 in an odd bank 28B. In each of these memory slots, a SIMM (Single In Line Memory Module), which is a memory module, is to be inserted. The SIMMs are divided into single-side and double-side packaged SIMMs. RAS signals are assigned to each side of the SIMM, respectively. Thereafter, a memory module on a single side of the SIMM is called a memory unit.

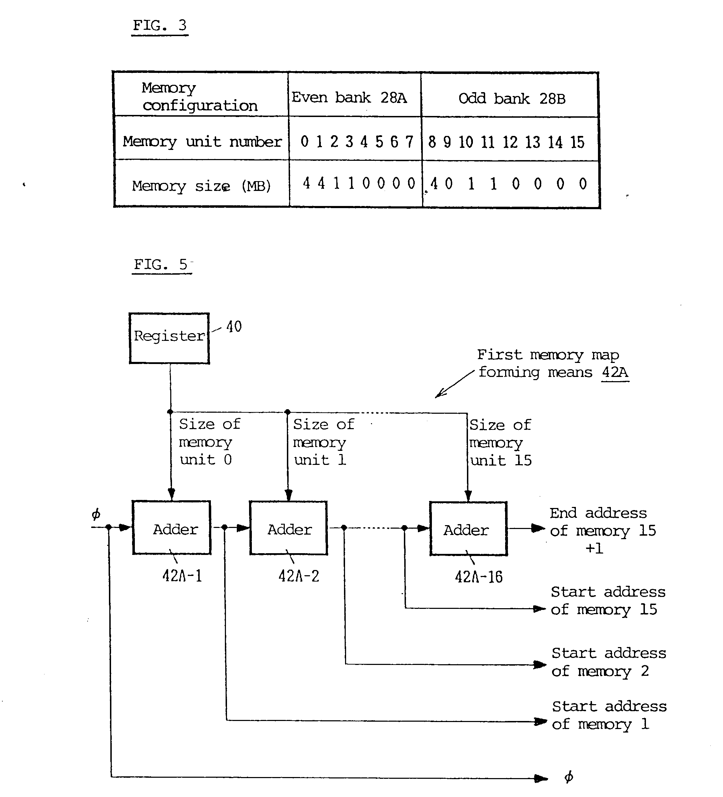

FIG.3 shows an example of the configuration where SIMMs are provided to the memory slots. In the figure, memory units 0 and 1 correspond to one side and the other side of the memory slot 28A-0, respectively. Likewise, each of following memory units corresponds to one side of one mernory slot. In the example of FIG.3, a 8M bytes SIMM which has a 4M bytes memory module on its one side and another 4M bytes memory module on its other side is attached to the memory slot 28A-0. A 2M bytes SIMM which has a 1M bytes memory module on its one side and another 1M bytes memory module on its other side is attached to the memory slot 28A-1. No SIMM is attached to the memory slots 28A-2 and 28A-3 (memory units 4 to 7). In the odd bank 28B, a 4M bytes SIMM which has a 4M bytes module on its one side is attached to the memory slot 28B-0 (memory units 8 and 9). A 2M bytes SIMM which has a 1M bytes memory module on its one side and another 1M bytes memory module on its other side is attached to the memory slot 28B-1 (memory units 10 and 11). No SIMM is attached to the memory slots 28B-2 and 28B-3 (memory units 12 to 15).

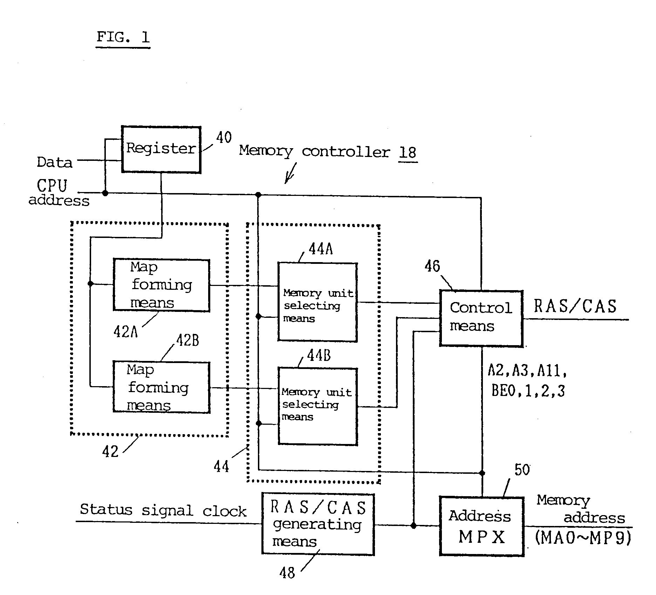

FIG.1 shows more detailed structure of the memory controller 18. In the figure, a register 40 stores information relating to the configuration of the memory slot 28. In more detail, the information in the register 40 retains each memory capacity or size attached to the memory units 0 to 15. Each SIMM has its own identifier. Upon system power on, a POST (Power On Self Test) program reads the identifiers and creates the information to be stored into the register 40 based on the identifiers.

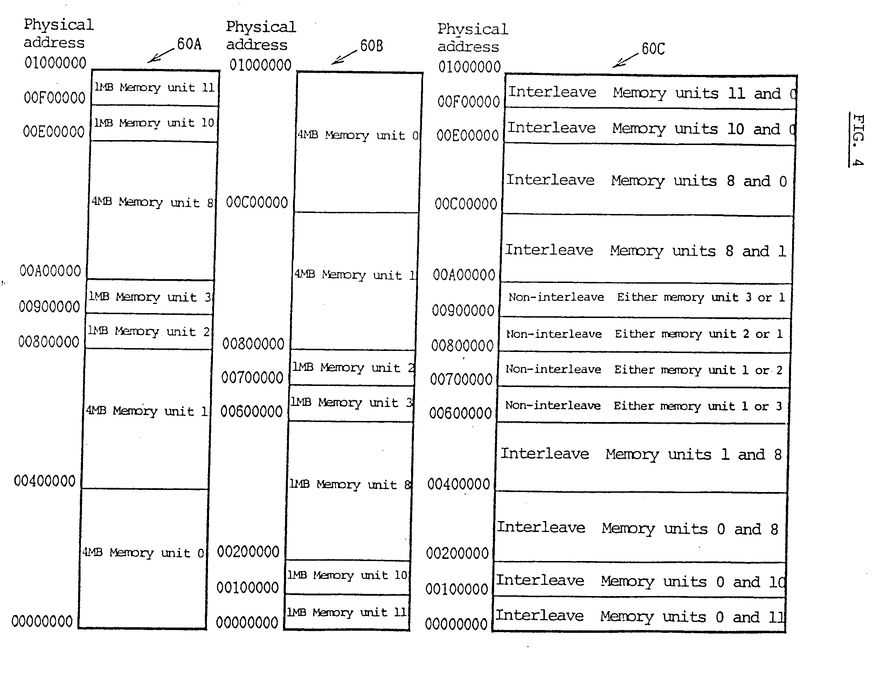

In FIG.1, memory map formation means 42 forms plural memory maps each of which is comprised of the memory units 0 to 15, based on the information in the register 40, in different orders acrording to the number of said banks 28A and 28B. Since two banks are used in the embodiment, two different memory maps are formed by the memory map formation means 42. The memory map formation means 42 is comprised of first memory map formation means 42A and second memory map formation means 42B. The first memory map formation means 42A arranges memory units in the even bank 28A, based on the information in the register 40, in the ascending order of unit numbers, and then arranges memory units in the odd bank 28B in the ascending order of unit numbers in order to form a first memory map 60A (Refer to FIG.4). The second memory map formation means 42B arranges memory units in the odd bank 28B, based on the information in the register 40, in the descending order of memory unit numbers, and then arranges memory units in the even bank 28A in the descending order of memory unit numbers to form a second memory map 60B (Refer to FIG.4).

Memory unit selection means 44 determine that a predetermined address range including the CPU address is assigned to which of memory units in each of the memory maps 60A and 60B. Herein, the CPU address means address sent from the CPU 10 or the DMA controller 12. In this embodiment, said predetermined range is an address range of 1M. If the CPU address has 32 bits width from A0 to A31, the address range of 1M is obtained by ignoring the least significant 20 bits from A0 to A19 from the CPU address. The memory unit selection means 44 is comprised of first and second memory unit selection means 44A and 44B. The first memory unit selecting means 44A designate one of the memory units to which the 1M address range is assigned within the first memory map 60A. The second memory unit selection means 44B designate one of the memory units to which the 1M address range is assigned within the second memory map 60B.

Control means 46 have the function of detecting whether memory units designated by the first and the second selection means 44A and 44B are in different banks to each other or not. If they are in different banks, the control means 46 generate physical addresses so that an interleave memory access operation between the banks 28A and 28B is performed. If they are in the same one of the banks, the control means 46 generate physical address so that non-interleave memory access operation to one of the banks 28A or 28B is performed.

In this embodiment, each one of 16 RAS (Raw Address Strobe) lines is connected to each one of 16 memory units in the banks, respectively. A group of four CAS (Column Address Strobe) lines is connected to one of the banks, and another group of four CAS lines is connected to the other banks. In interleave memory access operation, two of the 16 RAS lines become active simultaneously and two groups of the CAS lines become active simultaneously. The number of CAS lines within the group which become active simultaneously is determined depending on two least significant bits A0 and A1 in the CPU address. A0 and A1 correspond to byte enable lines BE0, BE1, BE2, and BE3. In non-interleave memory access operation, one of the 16 RAS lines becomes active and only one group of the CAS lines connected to the bank which is activated by the RAS signal becomes active. The number of CAS lines within the group which become active simultaneously is determined depending on two least significant bits A0 and A1 in the CPU address. The control means 46 receives A11, A3, and A2 in the CPU address and the bit enabling signals BE0, BE1, BE2, and BE3. As mentioned above, BE0, BE1, BE2, and BE3 correspond to A0 and A1. The control means 46 selectively activate or decode the RAS/CAS based on A11, A3, and A2 in the CPU address and the bit enabling signals BE0, BE1, BE2, and BE3.

A RAS/CAS generator 48 generates a timing signal based on a status signal and a clock signal from the CPU 10. The timing signal from the generator 48 is used for the control means 46 to output the RAS/CAS signsals. An address multiplex 50 generates a 10 bits address signal in accordance with the RAS/CAS signal. A 20 bits address, which is comprised of a 10 bits address in accordance with the RAS signal and another 10 bits address in accordance with the CAS signal, assign one mernory location within 1M address range.

FIG.5 shows the first memory map formation means 42A in more detail. The means 42A includes adders 42A-1 to 42A-16 arranged in series. The adder 42A-1 adds the address size (capacity or address range) of the memory unit 0 onto the start address 00000000Hex of the first memory map 60A in order to obtain the start address of the memory unit 1 in the first memory map 60A. The adder 42A-2 adds the address size of the memory unit 1 onto the start address of the memory unit 1 in order to obtain the start address of the memory unit 2 in the first memory map 60A. Each of the adders 42A-3 through 42A-15 work similarly as the adders 42A-1 and 42A-2. The adder 42A-16 adds the address size of the memory unit 15 onto the start address of the memory unit 15 in order to obtain the end address of the memory unit 15 on the first memory map 60A. An address size of each memory unit is provided by the register 40.

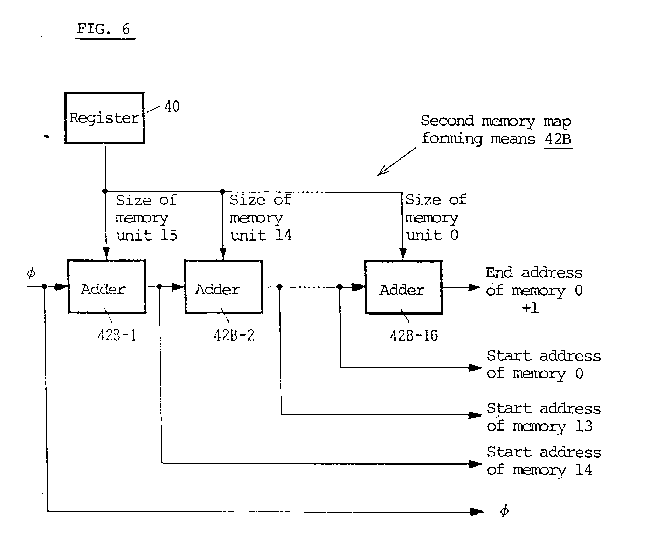

FIG.6 shows the second memory map formation means 42B in more detail. The means 42B includes adders 42B-1 to 42B-16 arranged in series. The adder 42B-1 adds the address size of the memory unit 15 onto the start address 00000000Hex of the second memory map 60B in order to obtain the start address of the memory unit 14 in the second memory map 60B. The adder 42B-2 adds the address size of the memory unit 14 onto the start address of the memory unit 14 in order to obtain the start address of the memory unit 13 in the second memory map 60B. The adders 42B-3 through 42B-15 work similarly as the adders 42B-1 and 42B-2. The adder 42B-16 adds the address size of the memory unit 0 onto the start address of the memory unit 0 in order to obtain the end address of the memory unit 0 on the second memory map 60B. An address size of each memory unit is provided by the register 40.

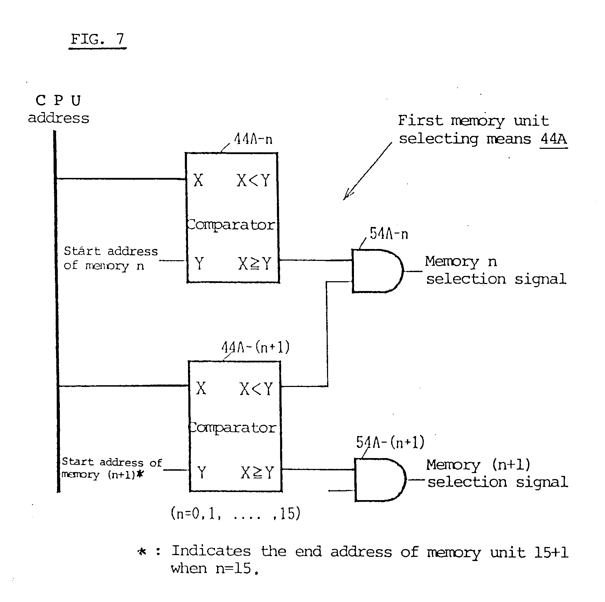

FIG.7 shows an example of a logic circuit of the first memory unit selecting means 44A, which includes comparators 44A-0 to 42A-16 arranged in parallel. Inputted to the X and the Y inputs of the comparator 44A-n (where n = 0, 1, ... 15) are an address or addresses from the CPU, etc. and an output from the adder 42A-n, which is the n-th adder of the first memory map forming means 42A, respectively. The output from said adder indicates the start address of the memory unit n on the first memory map 60A. Therefore, the comparator 44A-n compares an address (X) from the CPU, etc. with the start address (Y) of the memory unit n on the first memory map 60A and outputs "true" from (X>=Y) if the address (X) from the CPU, etc. is greater than or equal to the start address (Y) of the memory unit n on the first memory map 60A, and outputs "true" from (X<Y) if the address (X) from CPU, etc. is less than the start address (Y) of the memory unit n on the first memory map 60A.

Similarly, the comparator 44A-(n+1) compares an address (X) from the CPU, etc. with the start address (Y) of the memory unit (n+1) on the first memory map 60A and outputs "true" from (X>=Y) if the address (X) from the CPU, etc. is greater than or equal to the start address (Y) of the memory unit (n+1) on the first memory map 60A and outputs "true" from (X<Y) if the address (X) from the CPU, etc. is less than the start address (Y) of the memory unit (n+1) on the first memory map 60A. An AND circuit 54A-n makes a line for selecting the memory unit n active if both the (X>=Y) output of the comparator 44A-n and the (X<Y) output of the comparator 44A-(n+1) are true. Similarly, other comparators and AND circuits make lines for selecting respective memory units active.

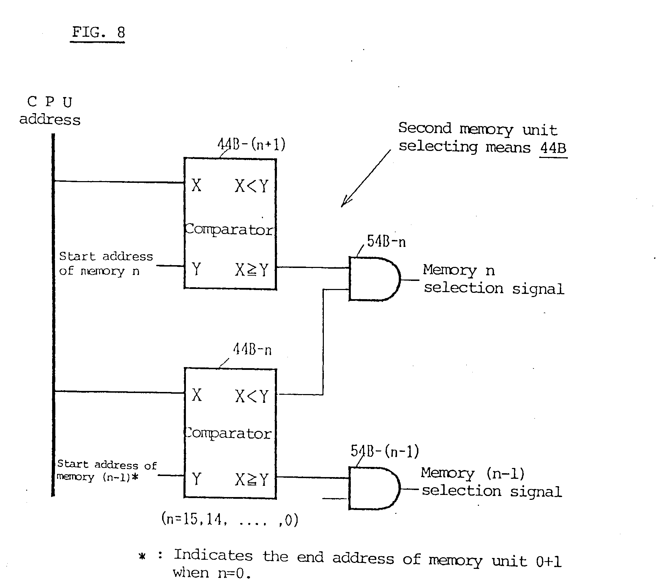

FIG.8 shows an example of a logic circuit of the second memory unit selecting means 44B, which includes comparators 44B-0 to 44B-16 arranged in parallel. Inputted to the X and the Y inputs of the comparator 44B-(n+1) (where n = 15, 14, ... 0) are an address from the CPU, etc. and an output from the adder 42B-(15-n), which is the (15-n)th adder of the second memory map forming means 42B, respectively. The output from said adder indicates the start address of the memory unit n on the second memory map 60B. Therefore, the comparator 44B-(n+1) compares an address (X) from the CPU, etc. with the start address (Y) of the memory unit n on the second memory map 60B and outputs "true" from (X>=Y) if the address (X) from the CPU, etc. is greater than or equal to the start address (Y) of the memory unit n on the second memory map 60B, and output "true" from (X<Y) if the address (X) from CPU, etc. is less than the start address (Y) of the memory unit n on the second memory map 60B.

Similarly, the comparator 44B-n compares an address (X) from the CPU, etc. with the start address (Y) of the memory unit (n-1) on the second memory map 60B and outputs "true" from (X>=Y) if the address (X) from the CPU, etc. is greater than or equal to the start address (Y) of the memory unit (n-1) on the second memory map 60B and outputs "true" from (X<Y) if the address (X) from the CPU, etc. is less than the start address (Y) of the memory unit (n-1) on the second memory map 60B. An AND circuit 54B-n makes a line for selecting the memory unit n active if both the (X<Y) output of the comparator 44B-n and the (X>=Y) output of the comparator 44B-(n+1) are true. Similarly, other comparators and AND circuits make lines for selecting respective memory units active.

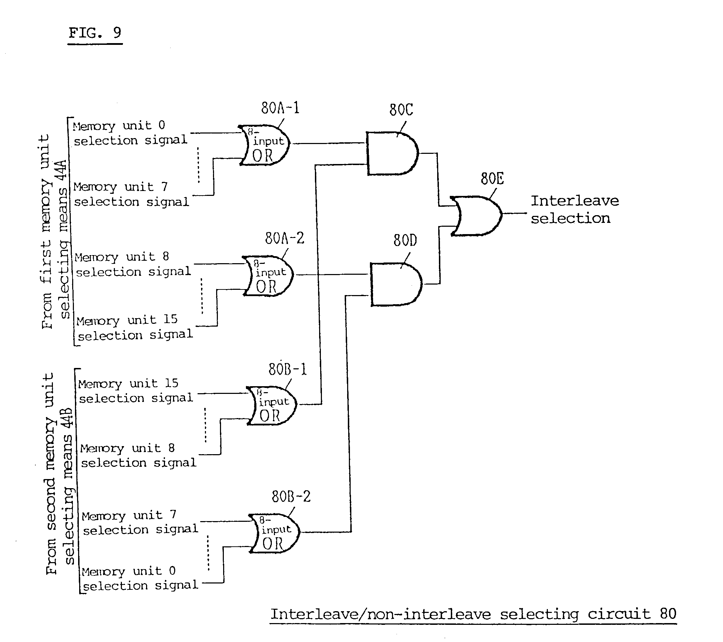

FIG.9 shows an interleave/non-interleave selecting circuit 80 for outputting a signal indicating whether the memory units designated by the first and the second memory unit selecting means 44A and 44B, respectively, belong to different banks each other. The circuit 80 is in the control means 46. Referring to FIG.9, connected to a 8-input OR circuit 80A-1, are eight selection lines for the memory units 0 to 7 in the even bank 28A, of 16 memory unit selection lines from the first memory unit selecting means 44A and, on the other hand, connected to a 8-input OR circuit 80B-1, are eight selection lines for the memory units 8 to 15 in the odd bank 28B, of 16 memory unit selection lines from the second memory unit selecting means 44B. Outputs from the OR circuits 80A-1 and 80B-1 are provided to inputs of an AND circuit 80C. When an output of the AND circuit 80C is "true", both outputs of the OR circuit 80A-1 and the OR circuit 80B-1 are "true". This means that a memory unit which includes an address area (adress size) within the address range of 1M involving a CPU address according to the first memory map 60A and a memory unit which includes an address area within the same range according to the second memory map 60B are arranged in address areas less than 00600000 Hex of physical address on the physical address map 60C shown in FIG.4, that is, two memory units belong to different banks from each other.

Connected to a 8-input OR circuit 80A-2, are eight selection lines for the memory units 8 to 15 in the odd bank 28B, of 16 memory unit selection lines from the first memory unit selecting means 44A and, on the other hand, connected to a 8-input OR circuit 80B-2, are eight selection lines for the memory units 0 to 7 in the even bank 28A, of 16 memory unit selection lines from the second memory unit selecting means 44B. Outputs from the OR circuits 80A-2 and 80B-2 are provided to inputs of an AND circuit 80D. When an output of the AND circuit 80D is "true", both outputs of the OR circuit 80A-2 and the OR circuit 80B-2 are "true". This means that a memory unit which includes an address area (address size) within the range of 1M involving a CPU address according to the first memory map 60A and a memory unit which includes an address area within the same range according to the second memory map 60B are arranged in the same physical address area half below on the physical address map 60C shown in FIG.4, that is, two memory units belong to different banks to each other. An output from an OR circuit 80E therefore indicates "interleavable".

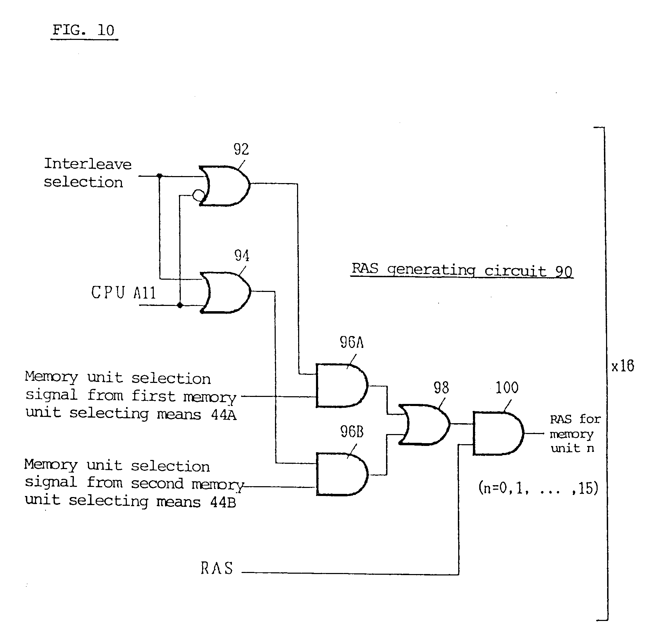

FIG.10 shows a RAS generating circuit 90 in the control means 46. The circuit 90 outputs a RAS signal, based on an output from the interleave/non-interleave selecting 80, to each of two memory units belonging to different banks simultaneously if interleaving is possible, or only to one memory unit if interleaving is not possible.

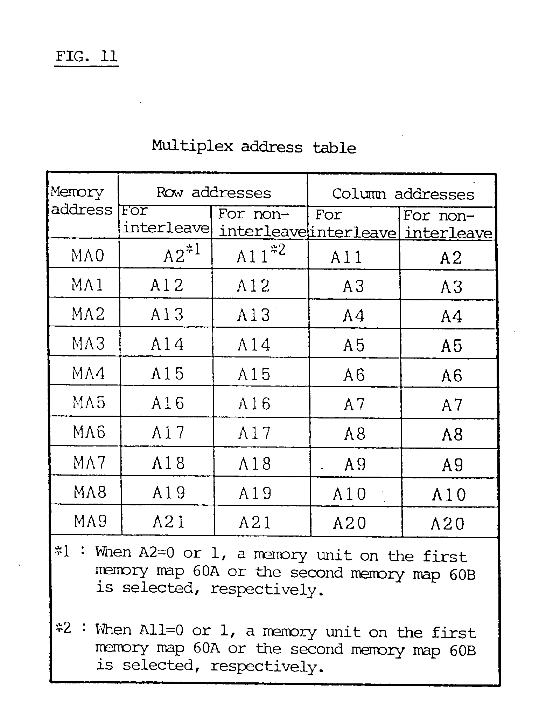

FIG.11 shows an example of a multiplex address table. When signals appearing in ten address bins MA0 to MA9 for memory units are latched at the rising edge of a RAS signal, row addresses can be obtained and when they are latched at the falling edge of a CAS signal, co column addresses can be obtained. For interleave access, memory units in two banks 28A and 28B are selected simultaneously. The table of FIG.11 shows how addresses from the CPU, etc. are allocated, for interleave access, to memory units in the even bank 28A and the odd bank 28B. That is, the table shows concretely how the addresses from the CPU, etc. are allocated to a memory unit on the first memory map 60A and a memory unit on the second memory map 60B. According to the table of FIG.11, if an address A2 from the CPU, etc. is 0, a memory unit on the first memory map 60A is selected and if A2 is 1, a memory unit on the second memory map 60B is selected.

The table in FIG.11 also shows how addresses from the CPU, etc. are allocated, for non-interleave access, to memory units in the even bank 28A and the odd bank 28B. That is, the table shows concretely how the addresses from the CPU, etc. are allocated to a memory unit on the first memory map 60A and a memory unit on the second memory map 60B. For non-interleave access, either one memory unit on the first memory map 60A or one memory unit on the second memory map 60B are selected. according to the table of FIG.11, whether a memory unit on the first memory map 60A is selected or a memory unit on the second memory map 60B is selected, is determined by the value of an address A11 from the CPU, etc. If A11=0, a memory unit on the first memory map 60A is selected, and if A11=1, a memory unit on the second memory map 60B is selected.

According to the above embodiment, even if SIMMs are inserted into the memory slots for the even bank 28A and the odd bank 28B in any order, interleave access can be always made to a memory address within the maximum range. That is, the embodiment has an advantage that an interleave access operation can be always performed within the range of the twice the lower memory capacity of the even bank 28A and the odd bank 28B, regardless of the configuration of the SIMMs inserted.

As DOS or 0S/2 is located at lower or higher physical addresses in the system memory, respectively, so an operating system is gernerally located at lower or higher physical addresses in the system memory. In the embodiment, as is obvious from the physical address map 60C shown in FIG.4, the interleavable address ranges involve the upper and the lower locations. This allows the address ranges within which a program such as the operating system to be frequently executed is stored, to be inter-leaved and has an advantage of the higher speed of the execution of program.

In said embodiment, the first memory map comprising the memory units in the even bank arranged in the ascending order and memory units in the odd bank arranged in the ascending order and the second memory map comprising the memory units arranged in the reverse order relative to said first memory map are formed. However, it will be appreciated that other memory map configuration is allowed if the arrangement of the memory units varies from memory map to memory map. However, if the memory units in the even bank are arranged in the ascending order and then the memory units in the odd bank are arranged to form the first map, and the memory units are arranged in the reverse order relative to said first memory map to form the second memory map, it is advantageous that the interleavable address ranges involve the upper and the lower locations, as described above, within the full address range, and therefore interleaving can be made to the address ranges within which a program such as the operating system to be frequently executed is stored.

Further, it will be appreciated also that the present invention can be applied not only to two-way interleaving, but also to more than two interleavable memory banks.

As described above, according to the present invention, even if plural memory modules are installed, or added as a system memory in whatever state or configuration by an user, a maximum possible memory range accessed in interleave operation can be obtained.

## Claims

1. A data processing system comprising:
a CPU;
a DMA controller;
a system memory, said memory being comprised of a plurality of memory banks, said banks being operable in an interleave memory access operation and being comprised of a plurality of memory units;
a memory controller for controlling access to said memory, said memory controller having means for forming a plurality of memory maps, said maps being comprised of memory units arranged in different orders according to the number of said banks, for relating addresses from said CPU or said DMA controller to the memory units in each of said maps, and for generating the physical location address in interleave memory access operation or non-interleave memory access operation in accordance with the detected memory units being in different banks or the same bank; and
a bus for connecting said CPU and/or said DMA controller to said memory controller.

2. A data processing system as defined in claim 1, wherein said memory controller has:
register means for storing information, said information being relating to the address sizes of said memory units and the allocation of said memory units in each of said banks;
memory map formation means for forming a plurality of memory maps based on the information stored in said register, in which said memory units are arranged in different orders according to the number of said banks;
memory unit selection means for selecting which of the memory units in each of said maps the address from said CPU or said DMA controller is assigned to; and
control means for generating the physical location address in interleave memory access operation or non-interleave memory access operation in accordance with the selected units being assigned in to different banks or the same bank, respectively.

3. A data processing system as defined in claim 1 or 2, wherein
said banks are comprised of first and second memory banks;
said memory maps are comprised of a first memory map and a second memory map, said first memory map being comprised of memory units in the first bank arranged in a predetermined order and memory units in the second bank arranged in a predetermined order, said second map being comprised of memory units arranged in reverse order relative to that of the first map.

4. A memory controller for use in the system of claim 1, 2 or 3 wherein said controller has:
means for forming a plurality of memory maps, each of said maps being comprised of said memory units arranged in different order each other;
means for detecting which memory units in each of said maps the address from the CPU or the DMA controller is assigned to;
means for generating said physical location address in interleave memory access operations or non-interleave memory access operation in accordance with whether the detected memory units are in interleavable banks or not, respectively.
